Europäisches Patentamt

European Patent Office

Office européen des brevets

(19)

(11) Numéro de publication: **0 274 291**
**B1**

(12) ## FASCICULE DE BREVET EUROPEEN

(45) Date de publication du fascicule du brevet:
**08.08.90**

(51) Int. Cl.⁵: **F16B 37/04**

(21) Numéro de dépôt: **87402630.5**

(22) Date de dépôt: **23.11.87**

(54) Dispositif de fixation d'un élément sur une face externe d'une paroi d'appui d'un corps creux.

(30) Priorité: **02.12.86 FR 8616820**

(43) Date de publication de la demande:
**13.07.88 Bulletin 88/28**

(45) Mention de la délivrance du brevet:
**08.08.90 Bulletin 90/32**

(84) Etats contractants désignés:
**DE GB IT**

(56) Documents cités:
**GB-A- 1 028 684**
**US-A- 2 552 499**
**US-A- 2 611 633**
**US-A- 2 883 011**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Gillet, Guy, 16, Route de Breançon,
F-95640 Marines(FR)**

(74) Mandataire: **Kohn, Philippe et al, c/o CABINET
LAVOIX 2, place d'Estienne d'Orves, F-75441 Paris
Cédex 09(FR)**

## Description

La présente invention se rapporte aux dispositifs de fixation d'un élément sur une face externe d'une paroi d'appui d'un corps creux, à proximité d'une première cloison de ce corps, perpendiculaire à ladite face, ce dispositif comportant une vis qui traverse une partie de l'élément et ladite paroi d'appui, et qui coopère avec un écrou en appui sur une paroi interne du corps creux, parallèle à ladite face externe.

On connait déjà dans l'état de la technique un certain nombre de dispositifs de fixation pour ce type d'applications.

Ainsi par exemple, on connait des dispositifs comportant des écrous à bossages à souder. Cependant, ces dispositifs ne permettent pas de remplacer les éléments dans le corps creux, sans pratiquer d'intervention sur celui-ci. Par ailleurs, ce type de dispositifs demande un positionnement précis des différents éléments les constituant.

On connait également des dispositifs comportant des écrous en cage à languettes engagée dans une lumière pratiquée à côté d'un trou de passage de la vis dans la paroi sur laquelle prend appui la pièce à fixer. cette lumière affaiblit cette paroi et risque de provoquer une déformation au droit de la fixation, entraînant des amorces de rupture du corps creux.

Le but de l'invention est donc de résoudre ces problèmes en proposant un dispositif de fixation qui soit aisément amovible et qui n'affaiblisse pas sensiblement le corps creux.

A cet effet, l'invention a pour objet un dispositif de fixation du type tel que décrit précédemment, caractérisé en ce que l'écrou est constitué d'une plaquette dans laquelle est agencé au moins un trou taraudé et à laquelle est fixée élastiquement une agrafe traversant ladite première cloison par une ouverture qui permet l'introduction de la plaquette, l'agrafe étant elle-même fixée élastiquement à ladite première cloison.

Il est observé ici qu'un élément de fixation, constitué d'une plaquelle dans laquelle est agencé un trou taraudé et comprenant des parties replis munies de lames élastiques, fonctionnant simultanément comme écrou et comme agrafe, est connu du GB-A 1 028 684.

Selon d'autres caractéristiques :
- Le corps creux comportant une seconde cloison parallèle à la première, et la plaquette prenant appui entre ces deux cloisons, sur la paroi interne espacée de la paroi d'appui, cette paroi interne est constituée de deux languettes respectivement découpées dans chacune des deux cloisons et rabattues en vis à vis l'une de l'autre, et une entretoise tubulaire destinée à être traversée par la vis est interposée entre l'extrémité des languettes et ladite paroi d'appui;
- L'agrafe comporte deux lames élastiques qui enserrent la plaquette en s'y accrochant grâce à des formes ondulées complémentaires respectives de chaque lame et du contour de la plaquette;
- L'agrafe comporte une embase prenant appui sur le bord externe de l'ouverture, et les deux lames prennent appui par leurs extrémités repliées sur le bord interne de cette ouverture.

L'invention sera mieux comprise à l'aide de la description qui va suivre, donnée uniquement à titre d'exemple et faite en se référant aux dessins annexés, sur lesquels :

- la Fig.1 représente une vue de côté en coupe d'un dispositif selon l'invention;
- la Fig.2 représente une vue en coupe suivant la ligne II-II de la Fig.1; et
- la Fig.3 représente une vue en perspective d'une agrafe entrant dans la constitution du dispositif.

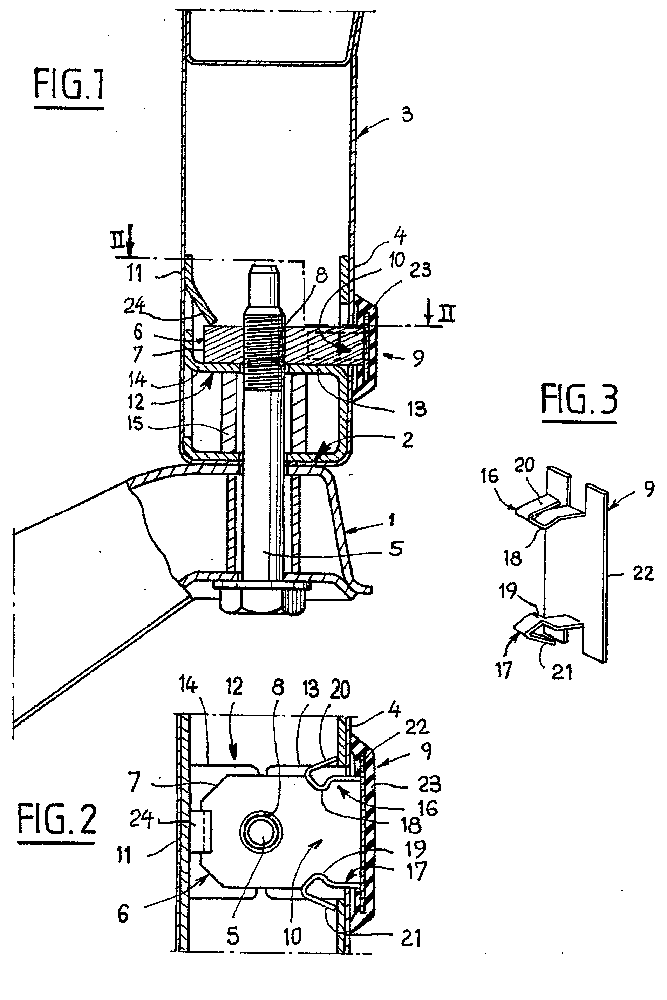

Ainsi qu'on peut le voir sur les Fig.1 et 2, un dispositif de fixation selon l'invention permet de fixer un élément 1 sur une face externe d'une paroi d'appui 2 d'un corps creux 3 à proximité d'une première cloison 4 de ce corps, cette première cloison 4 étant perpendiculaire à la face externe de la paroi d'appui 2. Ce dispositif comporte une vis 5 qui traverse une partie de l'élément 1 et la paroi 2 d'appui et qui coopère avec un écrou 6.

Dans le dispositif selon l'invention, cet écrou est constitué par une plaquette 7 dans laquelle est agencé au moins un trou taraudé 8 et à laquelle est fixée élastiquement une agrafe 9. Cette agrafe traverse la première cloison 4 du corps creux, par une ouverture 10 qui permet également l'introduction de la plaquette dans ce corps creux. L'agrafe 9 est également fixée élastiquement à la première cloison 4 comme cela sera décrit par la suite.

Le corps creux 3 comporte également une seconde cloison 11 parallèle à la première et la plaquette 7 prend appui entre ces deux cloisons sur une paroi interne 12 du corps creux, espacée de la paroi d'appui 2 de celui-ci et parallèle à celle-ci et plus particulièrement à la face externe de cette paroi d'appui 2.

Cette paroi interne 12 est constituée par deux languettes 13 et 14 découpées dans chacune des deux cloisons 4 et 11 du corps creux 3 et rabattues en vis à vis l'une de l'autre.

Une entretoise tubulaire 15 destinée à être traversée par la vis 5 est interposée entre l'extrémité des languettes 13 et 14 constituant la paroi interne 12 du corps creux et la paroi d'appui 2 de ce lui-ci.

Comme on peut le voir plus clairement sur les Fig.2 et 3, l'agrafe 9 comporte deux lames élastiques 16 et 17 comportant des formes ondulées 18 et 19 coopérant avec des formes complémentaires de la plaquette 7 pour permettre son accrochage élastique sur celle-ci.

Ces lames élastiques de l'agrafe comportent également des extrémités repliées 20 et 21 prenant appui sur le bord interne de l'ouverture 10 pour bloquer l'ensemble en position. A cet effet, l'agrafe comporte également une embase 22 prenant appui sur le bord externe de cette ouverture 10.

Selon les besoins, un joint souple 23 entourant l'embase 22 de l'agrafe et fixé sur celle-ci, peut être interposé entre cette embase et le bord externe de l'ouverture 10 de manière à assurer l'obturation de celle-ci et donc son étanchéité.

Par ailleurs, une languette 24 de positionnement de la plaquette peut également être prévue par exemple sur la seconde cloison 11 du corps creux.

Le montage d'un tel dispositif est extrêmement simple et rapide, et consiste à fixer l'agrafe sur la plaquette, puis à introduire cet ensemble dans le corps creux 3 par l'ouverture 10 et enfin à pousser sur cette agrafe jusqu'à ce que les extrémités repliées 20 et 21 de l'agrafe soient en position d'accrochage sur le bord interne de cette ouverture. Il va de soi que le joint 23 aura préalablement été disposé autour de l'embase 22 de l'agrafe dans le cas où un tel joint est utilisé.

Le démontage de cet ensemble est effectué par dégagement de l'agrafe, ce qui permet de retirer la plaquette.

Bien entendu, la plaquette 7 peut comporter plusieurs trous taraudés adaptés pour coopérer, par exemple, avec plusieurs vis.

Le dispositif proposé s'avère simple et fiable notamment grâce à l'absence de lumière dans la face d'appui, à l'étanchéité procurée par le joint, et à la longueur notable de la vis, permettant d'augmenter la fiabilité de la fixation par un couple de serrage approprié.

**Revendications**

1. Dispositif de fixation d'un élément (1) sur une face externe d'une paroi d'appui (2) d'un corps creux (3), à proximité d'une première cloison (4) perpendiculaire à ladite face, comportant une vis (5) qui traverse une partie de l'élément (1) et ladite paroi d'appui (2), et qui coopère avec un écrou (6) en appui sur une paroi interne (12) du corps creux, parallèle à ladite face externe, caractérisé en ce que l'écrou (6) est constitué d'une plaquette (7) dans laquelle est agencé au moins un trou taraudé (8) et à laquelle est fixée élastiquement une agrafe (9) traversant ladite cloison (4) par une ouverture (10), qui permet l'introduction de la plaquette (7), l'agrafe étant elle-même fixée élastiquement à la cloison (4).

2. Dispositif de fixation selon la revendication 1, caractérisé en ce que, le corps creux (3) comportant une seconde cloison (11) parallèle à la première (4), et la plaquette prenant appui entre ces deux cloisons sur la paroi interne (12) espacée de la paroi d'appui (2), cette paroi interne (12) est constituée de deux languettes (13,14) découpées dans chacune des deux cloisons (4, 11) et rabattues en vis à vis l'une de l'autre, et en ce qu'un entretoise tubulaire (15) destinée à être traversée par la vis (5) est interposée entre l'extrémité des languettes (13, 14) et la paroi d'appui (2).

3. Dispositif de fixation selon la revendication 1 ou 2, caractérisé en ce que l'agrafe (9) comporte deux lames élastiques (16, 17) qui enserrent la plaquette (7) et s'y accrochent grâce à des formes ondulées complémentaires (18, 19) de chaque lame et du contour de la plaquette (7).

4. Dispositif de fixation selon la revendication 3, caractérisé en ce que l'agrafe (9) comporte une embase (22) prenant appui sur le bord externe de l'ouverture (10), et en ce que les deux lames élastiques (16, 17) de celle-ci prennent appui par leurs extrémités repliées (20, 21) sur le bord interne de cette ouverture (10).

5. Dispositif de fixation selon la revendication 4, caractérisé en ce qu'un joint souple (23) entourant l'embase (22) et fixé sur celle-ci, est interposé entre cette embase et le bord externe de l'ouverture (10), en assurant l'obturation de celle-ci.

6. Dispositif de fixation selon l'une quelconque des revendications 2 à 5, caractérisé en ce qu'une languette de positionnement (24) de la plaquette, est prévue sur la seconde cloison (11) du corps creux (3).

**Claims**

1. Device for fixing of an element (1) onto an outer surface of a support wall (2) of a hollow body (3), close to a first partition (4) perpendicular to the said surface, comprising a screw (5) which extends through a part of the element (1) and the said support wall (2), and which co-operates with a nut (6) bearing against an inner wall (12) of the hollow body, parallel with the said outer surface, characterised in that the nut (6) is constituted by a plate (7) in which is arranged at least one tapped hole (8) and to which is resiliently fixed a fastener (9) extending through the said partition (4) through an opening (10), which allows the plate (7) to be inserted, the fastener being itself resiliently fixed to the partition (4).

2. Fixing device as claimed in claim 1, characterised in that, the hollow body (3) comprising a second partition (11) parallel to the first (4), and the plate bearing between these two partitions against the inner wall (12) which is at a distance from the support wall (2), this inner wall (12) is constituted by two tabs (13, 14) cut from each of the two partitions (4, 11) and turned over to face one another, and in that a tubular spacer (15) adapted to be traversed by the screw (5) is interposed between the ends of the tabs (13, 14) and the support wall (2).

3. Fixing device as claimed in claim 1 or 2, characterised in that the fastener (9) comprises two resilient strips (16, 17) which grip the plate (7) and which fasten onto it by means of complementary corrugations (18, 19) of each strip and of the contour of the plate (7).

4. Fixing device as claimed in claim 3, characterised in that the fastener (9) comprises a base (22) bearing against the outer edge of the opening (10), and in that the two resilient strips (16, 17) of the latter bear by their bent ends (20, 21) against the inner edge of this opening (10).

5. Fixing device as claimed in claim 4, characterised in that a flexible seal (23) surrounding the base (22) and fixed to the latter, is interposed between this base and the outer edge of the opening (10), closing the latter.

6. Fixing device as claimed in any of claims 2 to 5, characterised in that a tab (24) for positioning of the plate is provided on the second partition (11) of the hollow body (3).

**Patentansprüche**

1. Vorrichtung zur Befestigung eines Bauteils (1) an einer Außenfläche einer Stützwand eines Hohlkörpers (3) in der Nähe einer zu der erwähnten Fläche senkrechten ersten Wand (4), mit einer Schraube (5), die durch einen Teil des Bauteils (1) sowie die Stützwand (2) geht und mit einer Schraubenmutter (6) zusammenwirkt, welche sich auf einer zu der erwähnten Außenfläche parallelen Innenwand (12) des Hohlkörpers abstützt, dadurch gekennzeichnet, daß die Schraubenmutter (6) aus einem Plättchen (7) besteht, in dem mindestens ein Gewindeloch (8) gebildet ist und an dem eine Klammer (9) elastisch befestigt ist, welche die genannte Wand (4) an einer Öffnung (10) durchsetzt, die das Einführen des Plättchens (7) gestattet, wobei die Klammer ihrerseits elastisch an der Wand (4) befestigt ist.

2. Befestigungsvorrichtung nach Anspruch 1, dadurch gekennzeichnet, daß der Hohlkörper (3) eine zur ersten (4) parallele zweite Wand (11) enthält und daß sich das Plättchen zwischen den beiden Wänden auf der Innenwand (12), die von der Stützwand (2) beabstandet ist, abstützt, daß die genannte Innenwand (12) aus zwei Zungen (13, 14) gebildet ist, die jeweils von einer der beiden Wände (4, 11) ausgeschnitten und aufeinander zu umgebogen sind, und daß eine rohrförmige Abstandshülse (15), die dazu bestimmt ist, von der Schraube (5) durchsetzt zu werden, zwischen den Enden der Zungen (13, 14) und der Stützwand (2) angeordnet ist.

3. Befestigungsvorrichtung nach Anspruch 1 oder 2, dadurch gekennzeichnet, daß die Klammer (9) zwei elastische Lamellen (16, 17) enthält, welche das Plättchen (7) einklemmen und sich wegen einer komplementären Wellenform (18, 19) jeder Lamelle und der Kontur des Plättchens (7) einhängen.

4. Befestigungsvorrichtung nach Anspruch 3, dadurch gekennzeichnet, daß die Klammer (9) einen Ansatz (22) enthält, der am Außenrand der Öffnung (10) anliegt und daß die beiden elastischen Lamellen (16, 17) derselben mit ihren umgebogenen Enden (20, 21) am Innenrand der Öffnung (10) anliegen.

5. Befestigungsvorrichtung nach Anspruch 4, dadurch gekennzeichnet, daß eine nachgiebige Abdichtung (23), die den Ansatz (22) umgibt und an diesem befestigt ist, zwischen dem Ansatz und dem Außenrand der Öffnung (10) angeordnet ist, um ein Verschließen der letzteren zu gewährleisten.

6. Befestigungsvorrichtung nach einem der Ansprüche 2 bis 5, dadurch gekennzeichnet, daß eine Positionierungszunge (24) für das Plättchen auf der zweiten Wand (11) des Hohlkörpers (3) vorgesehen ist.

EP 0 274 291 B1

FIG.1

FIG.3

FIG.2